# EUROPEAN PATENT APPLICATION

(11) **EP 0 680 712 A1**
(43) Date of publication of application: **08.11.1995**
(21) Application number: 95105424.6
(22) Date of filing: 11.04.1995
(51) Int. Cl.: A47B 95/04, A47B 96/18, A47B 77/00, B29C 45/17, B29C 45/14

(54) **Improvement in a single-piece frame in a box-like construction**

(30) Priority: 03.05.1994 IT PN940027
(71) Applicant: ELECTROLUX ZANUSSI ELETTRODOMESTICI S.p.A., I-33170 Pordenone (IT)
(72) Inventor: Cargnel, Giuseppe, I-31040 Chiarano, Treviso (IT); Cattaruzza, Attilio, I-33080 San Leonardo Valcellina, Pordeno (IT)
(74) Representative: Giugni, Valter

(57) **Abstract**

Worktop assembly, in particular for household or similar appliances, consisting of an inner plate (1) and an outer frame (2), the latter being made of plastic which is injection-moulded directly on to said inner plate, wherein said frame is at least partially provided with hollow inner portions (3) preferably made through the use of the gas-assist injection-moulded technique.

Said hollow inner portions are continuous and form a hollow ring inside said frame.

The walls (4) of said frame of thermoplastic material have substantially the same thickness.

## Description

The present invention refers to a single-piece frame which is directly injection-moulded as an overlay of thermoplastic material to complete rigid component parts, primarily to complete such rigid component parts as the top plate of major household appliances, in particular front-loading clothes washing machines, dishwashing machines, clothes driers and the like.

The outer casings of such major household appliances are known to be normally enclosed on their top portion by a plate which is commonly known as a working table top, or worktop.

Said working table top is usually made up by two component parts, of which a first component part is the central part of the worktop consisting of a rigid, four-sided plate normally made of some fibre, composite or plastic material, while the second component part is a frame of thermoplastic material surrounding said central plate to both decorative and functional purposes, since it is through such a frame that the whole worktop is actually attached to the outer casing of the appliance. Such a frame can be attached to the central plate in a variety of manners, such as for instance by clinching, bonding, injection-moulding plastic material on to the edges of the plate or some other technique. Anyway, a method which is widely used owing to technical and productive reasons is the so-called over injection technique, in which an overlay of plastic material is injection-moulded directly onto the part involved.

However, such a technique has some drawbacks which may be summarized as follows:
- aesthetical defects on the outer surfaces of the frame, due mainly to shrinking of the thermoplastic material during cool-down after moulding, these defects weighing rather heavily on a component part which is primarily decorative in its function;
- internal stresses arising in the structure of said frame owing to its solid nature, with eventual breakage after a certain period of time, as anyone skilled in the art is well aware of.

On the other hand, such drawbacks are practically in a correlation in that both depend on the fact that the over-injected moulding is solid. Such a circumstance works out as follows: since the inner element of the worktop to be framed is rigid, the over-injected plastic overlay, which is moulded thereon to a rather modest thickness, tends to shrink in a uniform manner when cooling down. However, due to the fact that it cannot shrink inwardly owing to the rigidity of said inner element, it tends to contract and, thereby, give rise to the unaesthetic saggings which clearly appear on the outer surfaces of the frame and, at the same time, gene rate internal stresses in such frames, which stresses, after a certain period of time or a certain number of temperature cycles, following a reduction in the elasticity of the material due to aging effects, and failing not only the central panel , but also the frame to yield, cause clearly visible crackings or fractures to appear on the outer surfaces of the same frames.

It would therefore be desirable, and it is actually a purpose of the present invention, to provide a frame for the worktop of major appliances for household utilization, which is provided with a structure of a modular type that is capable of ensuring all of the present advantages and utilizations, which is separate from the outer casing of the appliance, which is able to eliminate all of the afore cited structural and aesthetical drawbacks of current designs, which allows for an easy, convenient disassembly in view of recovering most of the recyclable materials, while excluding constructional or manufacturing complications and enabling currently available technologies to be employed.

The invention will be more clearly understood on the basis of the description which is given below by way of non-limiting example with reference to the accompanying drawings, in which:
- Figure 1 is a schematical, cross-section view of a frame according to the present invention and
- Figure 2 is a magnified view of a detail of said cross-section.

The aim of the invention is reached by substantially providing a frame of a thermoplastic material, in particular to enclose a working table top of a major household appliance, in which said frame is provided with inner hollow portions, ie. portions from which the initially filled-in thermoplastic material is removed, while the outer surfaces thereof are correctly and completely filled.

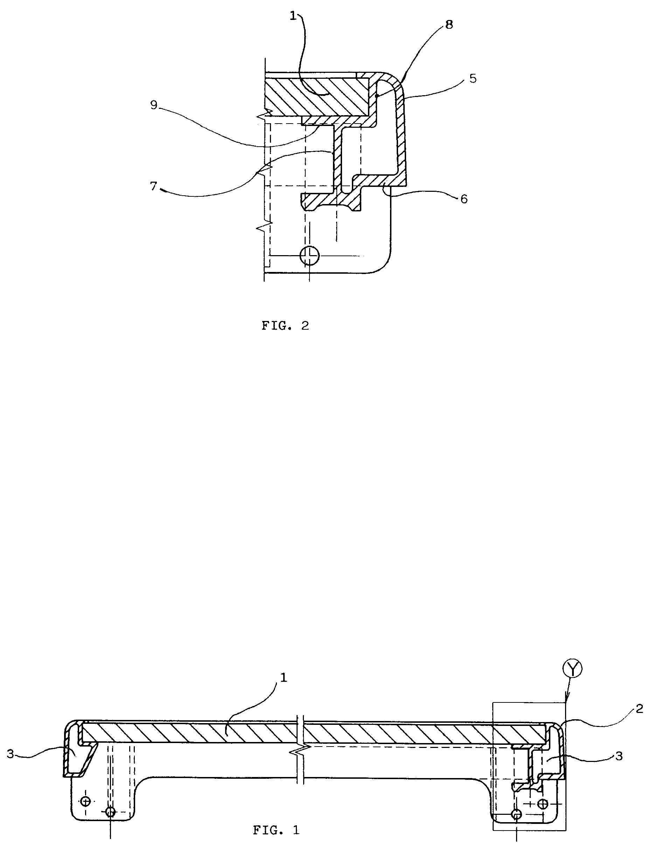

If reference is made now to Figure 1, it can be seen that it illustrates a worktop consisting of an inner plate 1 and a frame 2 that is injection-moulded directly thereupon. The inner portions 3 of said frame are hollow, whereas all of its outer surfaces are filled by the thermoplastic material.

The circumstance of said inner portions 3 of the frame being hollow is instrumental in determining the fact that some portions of said frame come in direct contact with the mould, such as for instance the portions indicated with the reference numerals 5, 6 and 7, whereas the remaining portions 8 and 9 are separated from the mould and in direct contact with the plate to be framed.

It has been demonstrated experimentally that this brings about a differentiated cooling down of said portions, in the sense that the portions 5, 6 and 7, which are in direct contact with the mould, tend to cool down much more quickly than the portions 8 and 9 which are separated from the mould. This is above all determined by the insulation effect which is created between said portions by the cavities that are substantially provided between said portions which therefore are enabled to behave in a manner which is quite dependent on the respective type of surface with which they are in contact.

Therefore, the quick cool-down of such portions which are in contact with the mould will cause them to solidify, and of course shrink, while the other portions are still dwelling in a half-molten state.

It is exactly owing to such a difference of state that the contraction of the portions which are the first to cool down brings about a yielding effect accompanied by a partial sucking in of material from surrounding portions, as ensured by the portions 8 and 9 which are separated from the mould and in contact with the inner plate 1 and which, due to them still being in a half-molten state, tend to yield under the pushing effect of the neighbouring portions.

All this is instrumental in enabling those portions which are in contact with the mould to cool down without any internal stresses being brought about, while cooling down of those portions which are in contact with the inner plate 1 is allowed to take place much more gradually so as to enable the thermoplastic material of these portions to flow and relieve stresses where its shrinkage requires it, by taking advantage of its longer dwelling time in such a half-molten state.

Finally, if the afore cited hollow portions are produced with the so-called gas-assisted injection-moulding technique, which will be further discussed in greater detail in the following, said hollow portions within the frame are produced by blowing in high-pressure inert gas: such a high inner pressure will of course cause the outer surfaces to be pressed against the mould, and this of course also during the shrinking phase that takes place due to cooling down. This results in outer surfaces keeping conforming to the actual shape of the mould even after full cooling down of the moulded part and its release from the injection mould.

The ultimate result of such an operation lies in the fact that a frame constructed in such a manner can be provided with the above illustrated injection-moulding process and enables the desired advantages to be achieved, said advantages being in the specific case a much improved flatness and evennes of the outer surfaces having a decorative function, thanks to the high inner pressure that keeps the thermoplastic material from shrinking and therefore said outer surfaces from becoming downgraded, along with the much improved resistance to failure in the long run, thanks to practical absence of inner stresses in the moulded thermoplastic material.

The removal of the material from the inner portions of the frame in order to make them hollow can be carried out, if some appropriate expendients are implemented, by the use of the particular technology known as "gas-assist injection-moulding", which has already been disclosed in a number of patent specifications, such as for instance GB 2 231 834 and US 5,015,166. Such a moulding technology will anyway be shortly explained below in its basic elements.

The gas-assist injection-moulding technique consists of an inert gas being blown into a molten thermoplastic material as the latter is flowing into the mould cavity, in view of pushing the melt forwards so as to thereby promote complete filling of the mould cavity and create hollow portions in the desired shape.

The use of such a moulding process is first of all associated with a couple of particular advantages, ie. a reduction in shrinkage and the resulting internal stresses being brought about in the material as compared with the traditional high-pressure injection-moulding methods, and an improved surface finishing effect as compared to structural-foam moulding methods.

There are, however, a number of other practical advantages to be achieved through the use of such a technology. These advantages can be summarized as follows:
- a reduction in the weight of the moulded part, even by more than 50 percent, through the creation of hollow portions;
- an improvement in the stiffness, strength and structural stability of the assembly, since gas channels act as ribs which can be sized in a much more effective manner;
- greater fexibility in the design of the moulded part, owing to the fact that this technology allows for even significant thickness variations without this bringing about shrinkage, warping or similar problems, thanks to the packing action of the gas inside the larger cross-sections.

The practical implementation of this moulding technology can be essentially based on a couple of systems which differ from each other mainly for the position from which the gas is injected, ie.:
- either through the same nozzle of the injection moulding machine or
- in the flow channels or the mould cavity through special nozzles.

The latter system allows more nozzles to be used to introduce the gas, so that it is possible to mould parts with widely differing shapes in a single mould.

As a matter of fact, when the molten material is injected into an area corresponding to a low-thickness section (which shall remain quite compact) and the gas into an area corresponding to a larger-thickness section (for instance ribs, the inside of which has to be made hollow by the material removal action of the gas), it becomes possible to use hot-runner systems which cannot be applied in the case of gas injection through the nozzle of the injection moulding machine.

This adds flexibility to the process and makes it possible to further reduce costs thanks to the elimination of the traditional sprues.

A further variant of the two above cited systems calls for the gas to be introduced upon complete filling of the mould cavity by the molten material. Special traps for the molten resin (ie. the so-called melt traps), which are connected with the moulded part through adequately strong throttles (similar to injections) or controlled openings (such as valve-type injections), enable part of the molten polymer to be ejected.

Anyway, the above described methods are state-of-art techniques and, as such, are known to anyone skilled in the art, so that they are briefly illustrated here not as actual features of the present invention, but as a mere information for the reader in view of illustrating a possible preferred manner of implementing the present invention, this of course not excluding other possible embodiments and implementation techniques.

It will of course be appreciated that any worktop frame according to the appended claims may also be embodied with shapes and features differing from the illustrated ones, without this meaning a departure from the scope of the present invention.

## Claims

1. Worktop assembly, in particular for household appliances, consisting of an inner plate (1) and an outer frame (2) made of a plastic material that is directly injection-moulded thereon, **characterized in that** said frame is at least partly provided with hollow inner portions (3).

2. Worktop assembly according to claim 1, **characterized in that** the portions (5, 6, 7) of said frame of thermoplastic material, which come into direct contact with the mould, and the portions (8, 9) thereof, which are into direct contact with said inner plate, substantially have the same thickness.

3. Worktop assembly according to claim 1 or 2, **characterized in that** said outer frame (2) is injection-moulded directly on to said inner plate (1) using a gas-assist injection moulding technique.
